# EUROPEAN PATENT APPLICATION

(11) **EP 2 045 503 A2**
(43) Date of publication of application: **08.04.2009**
(21) Application number: 08165951.8
(22) Date of filing: 06.10.2008
(51) Int. Cl.: F16L 39/00

(54) **Shrouded coupling assemblies for conduits**

(30) Priority: 04.10.2007 US 867557
(71) Applicant: The Boeing Company, Chicago, IL 60606-2016 (US)
(72) Inventor: Carns, James A., Wichita, KS 67216-4502 (US); Cutler, Theron L., Wichita, KS 67205-6002 (US); Shelly, Mark A., Bel Aire, KS 67226-4209 (US)
(74) Representative: Howson, Richard G.B.

(57) **Abstract**

Provided are shrouded adapter assemblies (100) for coupling together a first conduit (300) and a second conduit (350). The conduits may both be single-walled or one may be shrouded. Thus, the first conduit may include an inner conduit and an outer conduit with a conduit annular space between the inner conduit and the outer conduit. The adapter assembly (100) may include a first adapter body (400) having a first end and a second end. The first end (422) is configured to receive an end of the inner conduit of the first conduit (300), and to receive an end of the outer conduit of the first conduit. The adapter assembly also includes a second adapter body (400) having a first end (422) and a second end, where the first end of the second adapter body is configured to receive an end of the second conduit (350). The adapter assembly (100) further includes a clamp (140) operatively engaging and clamping the second end of the first adapter body (400) to the second end of the second adapter body (400). The first adapter body and the second adapter body are each configured to provide fluid communication between the second conduit and the inner conduit and to isolate the conduit annular space from the second conduit and from the inner conduit.

## Description

### TECHNICAL FIELD

The embodiments described herein generally relate to conduits carrying a fluid, and more particularly relate to shrouded coupling assemblies for coupling together conduits for transfer of fluids.

### BACKGROUND

It is sometimes necessary to couple together fuel conduits to transfer fuel from a source to a receiving vessel. The Federal Aviation Administration (FAA) has promulgated regulations regarding the safe transfer of fuel via conduits in the aerospace industry. In order to meet some of these regulations, fuel transfer conduits may be structured as a "tube within a tube," often referred to as a "shrouded conduit," which effectively provides a double-walled conduit for containment of the fuel. In use, the fuel flows in the inner tube, or primary fuel conduit, and the annular space between the inner and outer conduits provides a leak detection zone.

The structure of embodiments of shrouded conduits is shown in the present assignee's Patent Publication number 2005/01205434 (US Serial Number 10/998,309, filed November 13, 2004), which is hereby fully incorporated by reference.

Leak detection at a junction between two conduits is often important, especially when the fluid in the conduits is combustible, highly valuable, or a toxic or hazardous substance. Accordingly, technologies for detection of leaks at a junction between two conduits are important in certain industries and in certain fluid transfer operations.

### BRIEF SUMMARY

An exemplary embodiment provides a shrouded adapter assembly for coupling together a first conduit and a second conduit. The first conduit includes an inner conduit and an outer conduit with a conduit annular space between the inner conduit and the outer conduit. The adapter assembly includes a first adapter body having a first end and a second end. The first end is configured to receive an end of the inner conduit of the first conduit, and to receive an end of the outer conduit of the first conduit. The adapter assembly also includes a second adapter body having a first end and a second end, where the first end of the second adapter body is configured to receive an end of the second conduit. The adapter assembly further includes a clamp operatively engaging and clamping the second end of the first adapter body to the second end of the second adapter body. The first adapter body and the second adapter body are each configured to provide fluid communication between the second conduit and the inner conduit and to isolate the conduit annular space from the second conduit and from the inner conduit.

Another exemplary embodiment provides a shrouded adapter assembly coupling together a shrouded conduit and a second conduit. The shrouded conduit includes an inner conduit and an outer conduit with a conduit annular space between the inner conduit and the outer conduit. The shrouded adapter assembly includes a first adapter body that has a first inner cylindrical portion nested within a first outer cylindrical portion with a first annular space between them. A first end of the inner cylindrical portion is configured to receive an end of the inner conduit. A first end of the first outer cylindrical portion is configured to receive an end of the outer conduit of the shrouded conduit. First inner seals are located proximate a second end of the first inner cylindrical portion and first outer seals are located proximate a second end of the first outer cylindrical portion. The adapter assembly also has a second adapter body that is configured to receive an end of the second conduit. The second adapter body includes a second inner cylindrical portion nested within a second outer cylindrical portion with a second annular space between them. The second inner cylindrical portion has second inner seals, and the second outer cylindrical portion has second outer seals. Further, the adapter assembly includes a first clamp operatively engaging the first inner seals and the second inner seals and a second clamp operatively engaging the first outer seals and the second outer seals. In this exemplary shrouded adapter assembly, a lumen of the inner conduit is in fluid communication with a lumen of the second conduit and these lumens are both isolated from the first annular space, the second annular space, and the conduit annular space.

A further exemplary embodiment provides a shrouded adapter assembly coupling together a first conduit and a second conduit. The shrouded assembly includes a first adapter body comprising a first lumen, a first annular space, and a first end. The first end is configured to receive an end of the first conduit and includes first seals. The assembly includes a second adapter body having a second lumen, a second annular space, and a second end. The second end is configured to receive an end of the second conduit and the second end includes second seals. Further, the assembly includes a clamp operatively engaging the first adapter body and the second adapter body. Thus, the first lumen and the second lumen are in fluid communication with each other, the first seals and the second seals isolate both of the lumens from the first annular space and the second annular space, and the first annular space and the second annular space are in fluid communication with each other.

### BRIEF DESCRIPTION OF THE DRAWINGS

Various embodiments will hereinafter be described in conjunction with the following drawing figures, wherein like numerals denote like elements, and
FIG. 1 is a perspective view of an embodiment of a shrouded conduit;
FIG. 2 is a perspective end view of the shrouded conduit of FIG. 1;
FIG. 3 is a cross-sectional view of the shrouded conduit taken along the plane 3-3 in FIG. 1;
FIG. 4 cross-sectional view of a portion of the shrouded conduit shown in FIG. 3;
FIG. 5 is a perspective view of an exemplary embodiment of a shrouded ferrule adapter assembly connecting two single-walled conduits;
FIG. 6 is a perspective view of a first side of an exemplary embodiment of a ferrule adapter;
FIG. 7 is a perspective view of a second side of an exemplary embodiment of a ferrule adapter;
FIG. 8 is a cross sectional view the exemplary embodiment of FIG. 5 of a shrouded ferrule adapter assembly connecting two single-walled conduits;
FIG. 9 is a perspective view of an exemplary embodiment of a shrouded ferrule adapter assembly connecting a single walled conduit to a shrouded conduit;
FIGS. 10-11 illustrate opposite side views of another exemplary embodiment of a shrouded ferrule adapter; and
FIG. 12 is a cross sectional view of FIG. 9 illustrating an exemplary embodiment of a shrouded ferrule adapter assembly connecting a shrouded conduit to a single-walled conduit.

### DETAILED DESCRIPTION

The following detailed description is merely exemplary in nature and is not intended to limit the described embodiments or the application and uses of the described embodiments. Furthermore, there is no intention to be bound by any expressed or implied theory presented in the preceding technical field, background, brief summary or the following detailed description.

Any specific references to aircraft herein should not be construed as limiting the scope of the present embodiments. In addition, it is also anticipated that the embodiments will be applicable to any of a wide range of fluids, e.g., gases and liquids, regardless of whether the fluid is being used as a fuel. Accordingly, specific references to fuel, gases, or liquids herein should not be construed as limiting the scope of the embodiments.

In addition, certain terminology may also be used in the following description for the purpose of reference only, and thus are not intended to be limiting. For example, terms such as "upper", "lower", "above", and "below" refer to directions in the drawings to which reference is made. Terms such as "front", "back", "rear", and "side", describe the orientation of portions of the component within a consistent but arbitrary frame of reference which is made clear by reference to the text and the associated drawings describing the component under discussion. Such terminology may include the words specifically mentioned above, derivatives thereof, and words of similar import. Similarly, the terms "first", "second" and other such numerical terms referring to structures do not imply a sequence or order unless clearly indicated by the context.

Exemplary embodiments provide shrouded ferrule assemblies that are configured to permit the coupling together of a shrouded conduit to a single-walled conduit. Other exemplary embodiments provide ferrule assemblies that permit the coupling together of two single-walled conduits, while providing a leak detection zone around the joint.

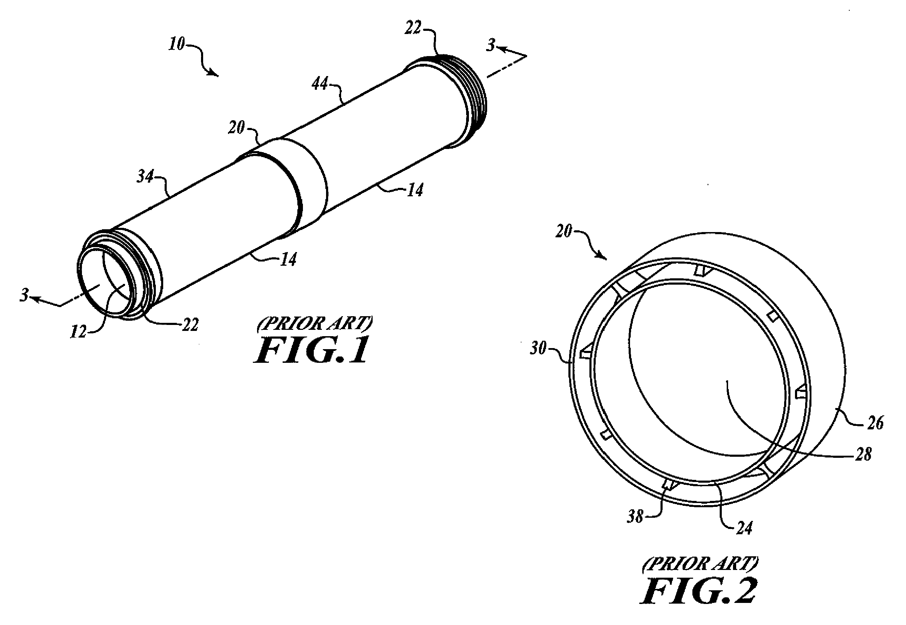

Shrouded conduits are disclosed in co-pending application US Serial No. 10/998,309 filed November 13, 2004. FIGS. 1-4 appear in that application and are reproduced here to explain the structure of an exemplary embodiment of a shrouded conduit.

FIG. 1 shows a shrouded conduit 10 in perspective view. Generally, the shrouded conduit 10 comprises at least one inner conduit 12 and at least one outer conduit 14 disposed around the inner conduit 12. The outer conduit 14 includes a lumen that is sized to receive the inner conduit 12. The inner conduit 12 includes a lumen that allows for a fluid (e.g., gases and liquids) flow through the inner conduit 12. The outer conduit 14 shrouds the inner conduit 12 to contain any fluid leaking from the inner conduit 12 and thus prevent the leaking fluid from reaching the compartment in which the shrouded conduit 10 is being used. Accordingly, the inner and outer conduits 12 and 14 must both fail before a fluid being conducted through the inner conduit 12 can reach the compartment or space in which the shrouded fluid-conducted apparatus 10 is being used. The shrouded conduit 10 thus allows a fluid to be conducted through the inner conduit 12 under a double failure condition.

As further shown in FIG. 1, the shrouded conduit 10 may include at least one support member 20. The inner conduit 12 may be inclined to move or shift within the outer conduit 14 while a fluid is being conducted through the inner conduit 12. The support member 20 prevents, or at least reduces, the movement of the inner conduit 12 within the outer conduit 14. In other words, the support member 20 holds or keeps the inner conduit 12 substantially stationary with respect to the outer conduit 14. Without the support member 20, a sufficiently high pressure within the inner conduit 12 could cause the inner conduit 12 to strike or impact the outer conduit 14 with sufficient force to damage either or both of the conduits 12 and 14. Accordingly, the support member 20 increases the stability and useful life of the shrouded fluid-conducting apparatus 10. In addition, and as described in greater detail below, the support member 20 may also allow for the installation of at least a portion of a fluid control system, allow for curvature of the shrouded conduit 10, and/or allow for loads to be transferred from the shrouded conduit 10 to an external component (e.g., ceiling joists, floor beams, and other load-bearing structures).

Still referring to FIG. 1, at least one shrouded end fitting 22 may be disposed at an end of the shrouded conduit 10. The shrouded end fittings 22 may be used to connect the shrouded conduit 10 to an additional shrouded fluid-conducting apparatus. The shrouded end fittings 22 may also be used to hold or keep the inner conduit 12 substantially stationary with respect to the outer conduit 14 and/or to transfer loads from the inner and outer conduits 12 and 14 to an external component (e.g., ceiling joists, floor beams, and other load-bearing structures).

It should be noted that although the Figures show a single support member 20, such need not be the case. For example, the shrouded fluid-conducting apparatus may comprise a plurality of (i.e., two or more) support members disposed between the two shrouded end fittings.

FIG. 2 is a perspective view of the support member 20. As shown, the support member 20 preferably comprises concentric annular-shaped or ring-like members 24 and 26. The inner and outer ring-like members 24 and 26 are separated by an annular space between the inner and outer ring-like members 24 and 26. Further, the support member 20 may further include a plurality of spokes, webs, or fins 38 that are disposed between the inner and outer ring-like members 24 and 26. The inner ring-like member 24 includes a central opening 28 that is sized to receive the inner conduit 12.

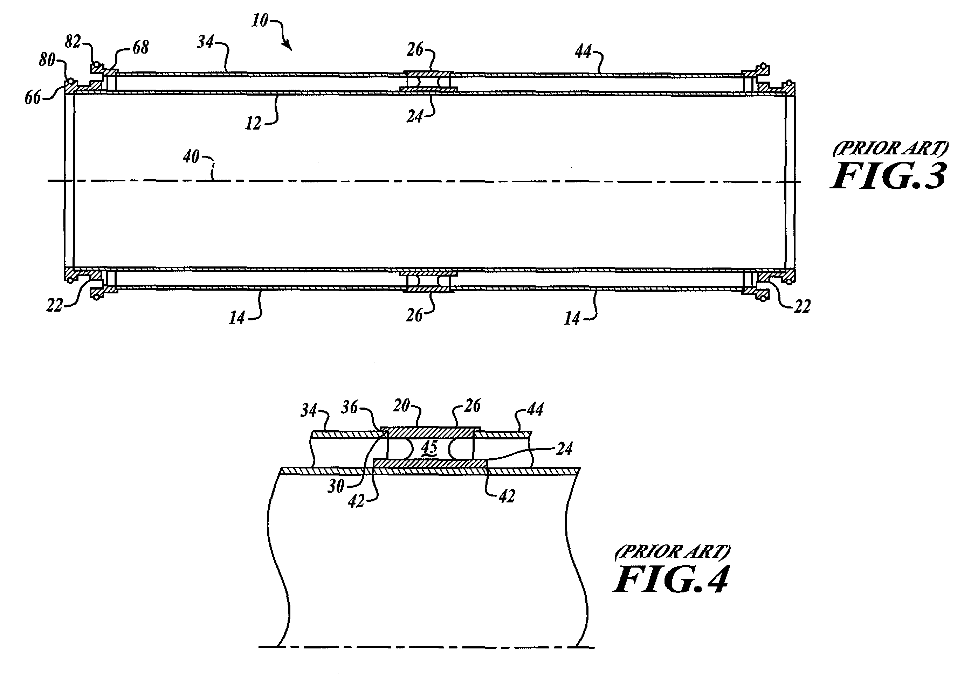

Referring to FIGS. 3 and 4, the support member 20 and the conduits 12 and 14 may be assembled in the following manner. First, the support member 20 is slidably positioned or disposed around the inner conduit 12, which preferably comprises a single continuous member. As shown, the inner conduit 12 is positioned within the inner ring-like member 24 of support member 20.

Next, the inner conduit 12 and inner ring-like member 24 are attached or secured to one another. For example, a compatible filler material may be used to weld (e.g., fillet weld, butt weld, etc.) the inner conduit 12 and inner ring-like member 24 to each other at any number of (i.e., one or more), but preferably at least two, locations thus creating weld joints 42. Or for example, an adhesive may be used to secure the inner conduit 12 to the inner ring-like member 24. Alternatively, other methods for attaching the inner conduit 12 to the inner ring-like member 24 may be used.

After the inner conduit 12 has been attached to the inner ring-like member 24, the outer conduit 14 is attached or secured to the outer ring-like member 26. As shown, the outer conduit 14 comprises a first portion 34 and a second portion 44 between which is disposed the outer ring-like member 26. The outer conduit portions 34 and 44 may be each welded (e.g., fillet weld, butt weld, etc.) to a corresponding weld socket 30 in the outer ring-like member 26 thus forming weld joints 36 between the support member 20 and the corresponding outer conduit portions 34 and 44. Alternatively, other methods for attaching the outer conduit portions 34 and 44 to the outer ring-like member 26 may be used.

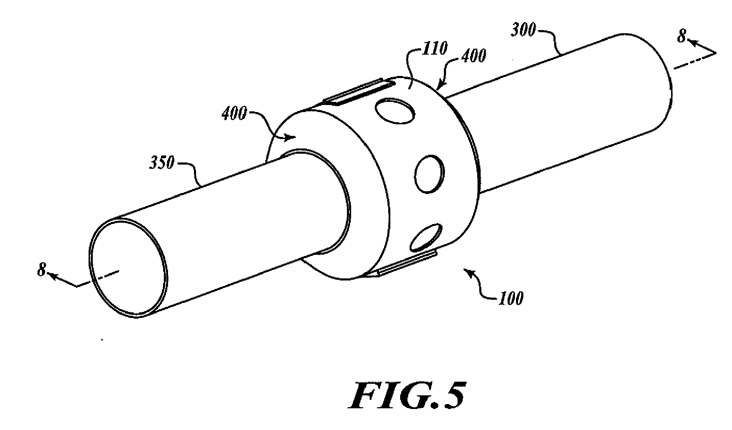

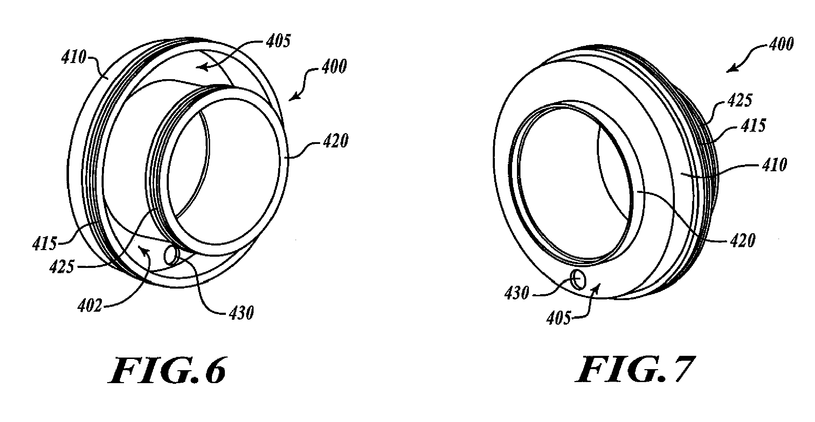

FIG. 5 illustrates a shrouded ferrule assembly 100 coupling together a first single-walled conduit 300 and a second single-walled conduit 350. The shrouded ferrule assembly 100 has an outer circular clamp 110 that clamps the assembly together, as can be seen more clearly from FIGS. 6, 7, and 8.

Referring to FIGS. 6 and 7, the ferrule 400 (broadly "adapter body") is of substantially cylindrical shape, and has an inner cylinder 420 nested within an outer cylinder 410, with an annular space 402 between them. While the inner and outer cylinders 420, 410 are co-axial, the inner cylinder 420 is longer than the outer cylinder. The two cylinders are joined by circular wall 405 which may optionally have a through-hole 430, configured to receive a leak detection sensor. The inner cylinder 420 has a groove around its outer circumference, proximate its extremity, configured to receive an o-ring seal 425. The outer cylinder 410 likewise has a groove around its circumference, proximate its extremity, configured to receive an o-ring seal 415. The inner cylinder 420 also has an opposite extremity (broadly "first end") 422 adapted to receive an end of a conduit.

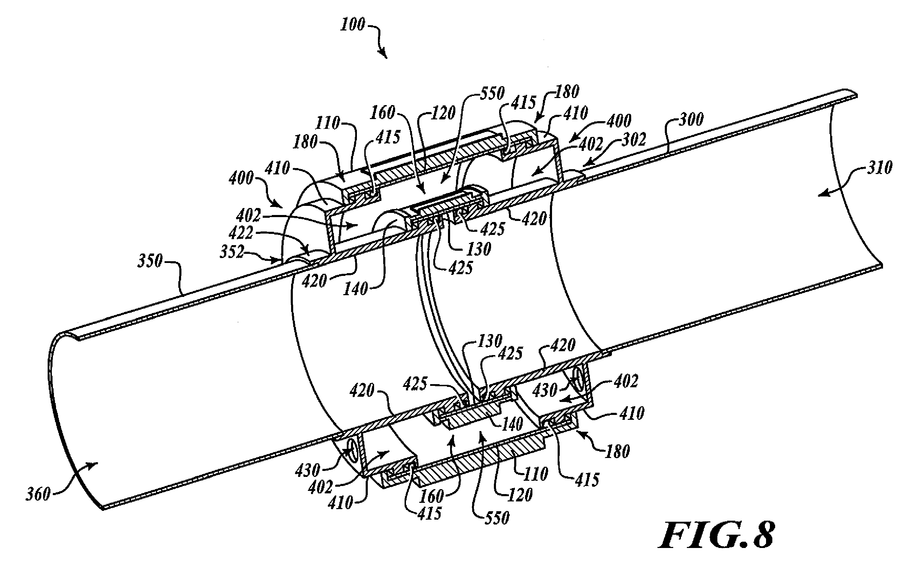

Referring now to FIG. 8, a cross-sectional view of FIG. 5, conduits 300, 350 each have a ferrule 400 attached to its respective end portion 302, 352. The two ferrules 400 are coupled together so that the lumen 310 of single-walled conduit 300 is coextensive with the lumen 360 of conduit 350 and there is unrestricted fluid communication between the two conduits. The mechanical coupling together of the two ferrules 400, in this example, is by a "ring and (circular) clamp" technique. Thus, the o-rings 415 at the extremities of the two inner cylinders 420 are sealed by a sealing ring 130 which is in turn clamped into position by a circular clamp 140. While the circular clamp 140 does not directly contact the o-ring seals 415, the circular clamp 140 nonetheless may be regarded as "operatively engaging" the o-ring seals 415 through the sealing ring 130. The combination of the o-ring seal 415, the sealing ring 130 and the circular clamp 140 forms an inner seal 160. This inner seal 160 prevents fluid migration from the lumens 310, 360 of the conduits 300, 350 into the combined annular spaces 402. The combined annular spaces 402 may be used as a leak detection space 550 to detect failure of the inner seal 160. In a similar manner, the outer cylinders are clamped together to form an outer seal 180 that includes an outer ring 120 surrounding o-ring seals 415, and an outer circular clamp 110 encircling and clamping the outer ring 120 in place. The shrouded ferrule assembly 100 formed provides a fluid-tight connection between conduits 300, 350 and provides a leak detection space that includes the two ferrule annular spaces 402.

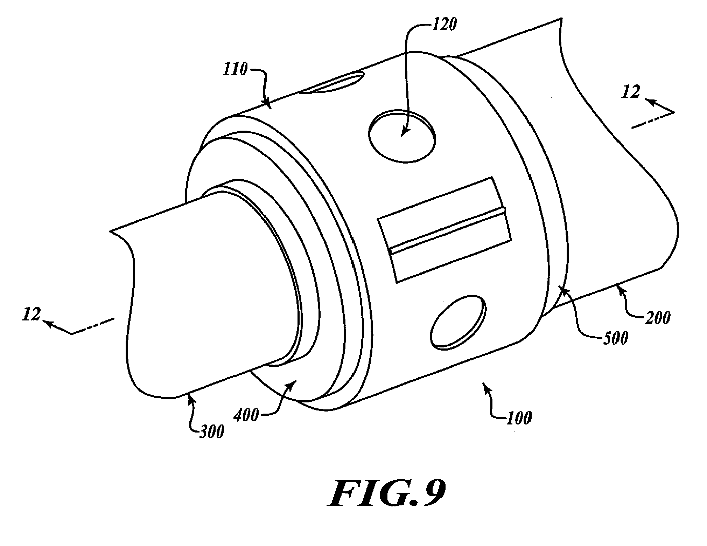

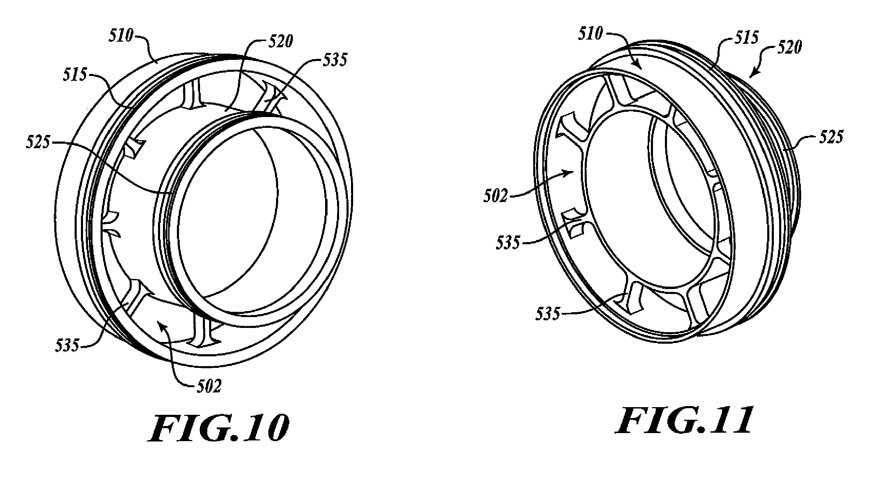

Another exemplary embodiment is illustrated in FIGS. 9-12. FIG. 9 depicts a shrouded ferrule assembly 100 coupling together a shrouded conduit 200 and a single-walled conduit 300. This shrouded ferrule assembly 100 includes a first ferrule 400, as illustrated in FIGS. 6 and 7, and a second ferrule 500, as illustrated in FIGS. 10-11. The ferrules 400, 500 are coupled together thereby joining the conduits in a fluid-tight seal, as explained here below.

Referring to FIGS. 10 and 11, the ferrule 500 is of substantially cylindrical overall shape and includes an inner cylinder 520 nested within an outer cylinder 510. Inner cylinder 520 and outer cylinder 510 are coaxial with an annular space 502 between them. The inner cylinder 520 is spaced from the outer cylinder 510 by a series of spokes 535 arrayed such that fluid may flow in spaces between the series of spokes 535. The inner cylinder 520 has a groove around its outer circumference, proximate its extremity, configured to receive an o-ring seal 525. The outer cylinder 510 likewise has a groove around its circumference, proximate its extremity, configured to receive an o-ring seal 515. The inner cylinder 520 also has an opposite extremity (broadly "first end") 522 adapted to receive an end of a conduit. Likewise, the outer cylinder 510 has an opposite extremity 512 adapted to receive an end of a conduit.

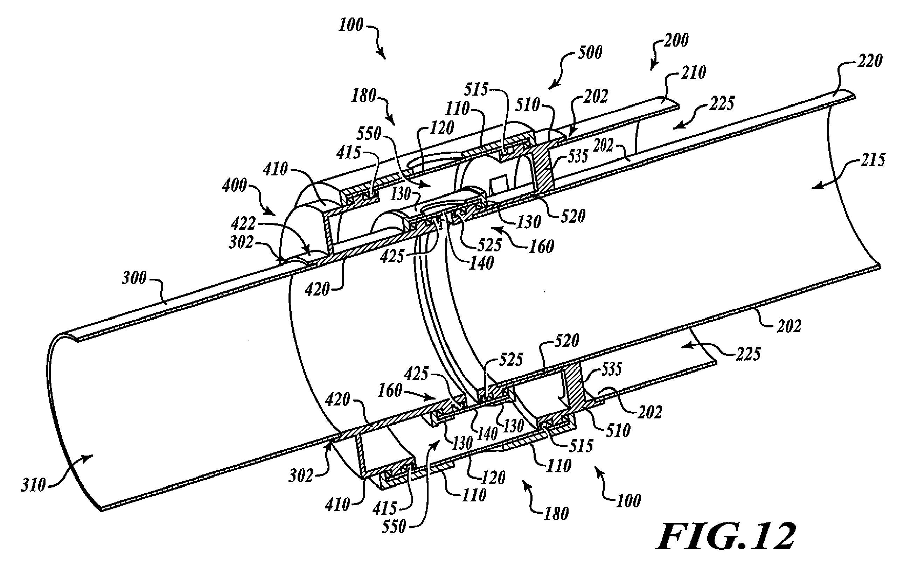

Referring now to the example shown in FIG. 12, single-walled conduit 300 (broadly "second conduit") has a ferrule 400, like that shown in FIGS. 6-7, attached to its end portion 302. Shrouded conduit 200 (broadly "first conduit"), that includes inner conduit 220 and outer conduit 210, has a ferrule 500 attached to shrouded conduit end(s) 202. In this example, the shrouded ferrule assembly 100 therefore includes two different ferrule structures (400, 500) that when coupled together create a leak detection space 550 that is in fluid communication with the annular space 225 between the inner and outer conduits 210, 220 of the shrouded conduit 200. The leak detection space 550 is isolated from lumens 310, 215 by seals, as explained below.

In the example of FIG. 8, the ferrules 400, 500 are coupled together with sealing rings and circular clamps to form the shrouded ferrule assembly 100. Inner cylinder 420 is sealed to inner cylinder 520 by an outer sealing ring 140 around o-ring seals 425, 525 that is clamped in place by inner sealing ring 130. This forms an inner seal 160 that prevents fluid communication between the lumens 215, 310 and the leak detection space 550 and the annular space 225. Failure of this inner seal 160 may be detected by a suitable sensor located in the leak detection space 550. Outer cylinder 410 is sealed to outer cylinder 510 by an outer ring 120 around o-ring seals 415, 515 that is clamped in place by outer circular clamp 110. As explained before, while the circular clamp 110 does not directly contact the o-ring seals 415, 515, the circular clamp 110 nonetheless may be regarded as "operatively engaging" the o-ring seals 415, 515 through the outer ring 120. The combination of the o-ring seals 415, 515, outer ring 120, and circular clamp 110 together forms outer seal 180 that prevents fluid communication with the surrounding environment.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the described embodiments in any way. Rather, the foregoing detailed description will provide those skilled in the art with a convenient road map for implementing the exemplary embodiment or exemplary embodiments. It should be understood that various changes can be made in the function and arrangement of elements without departing from the scope as set forth in the appended claims and the legal equivalents thereof.

## Claims

1. A shrouded adapter assembly for coupling together a first conduit and a second conduit, the first conduit comprising an inner conduit and an outer conduit with a conduit annular space between the inner conduit and the outer conduit, the shrouded adapter assembly comprising:
a first adapter body having a first end and a second end, the first end configured to receive an end of the inner conduit of the first conduit, and to receive an end of the outer conduit of the first conduit;
a second adapter body having a first end and a second end, the first end of the second adapter body configured to receive an end of the second conduit; and
a clamp operatively engaging and clamping the second end of the first adapter body to the second end of the second adapter body;
wherein the first adapter body and the second adapter body are each configured to provide fluid communication between the second conduit and the inner conduit and to isolate the conduit annular space from the second conduit and from the inner conduit.

2. The shrouded adapter assembly of Claim 1, wherein the first adapter body is substantially cylindrical and comprises a first inner cylindrical portion nested within a first outer cylindrical portion, with a first annular space between them.

3. The shrouded adapter assembly of Claim 2, wherein the second adapter body is substantially cylindrical and comprises a second inner cylindrical portion nested within a second outer cylindrical portion, with a second annular space between them.

4. The shrouded adapter assembly of Claim 3, wherein the first inner cylindrical portion and the second inner cylindrical portion are separated from each other by a series of spokes with spaces between for fluid flow therethrough.

5. The shrouded adapter assembly of Claim 4, wherein the first annular space and the second annular space are in fluid communication with each other and with the conduit annular space.

6. The shrouded adapter assembly of Claim 3, further comprising first inner seals located proximate an end of the first inner cylindrical portion, the first outer seals located proximate an end of the first outer cylindrical portion, second inner seals located proximate an end of the second inner cylindrical portion, and second outer seals located proximate an end of the second outer cylindrical portion.

7. The shrouded adapter assembly of Claim 6, wherein a ring surrounds the first inner seals and the second inner seals and an inner circular clamp surrounds the ring to form a fluid-tight tight seal.

8. A shrouded adapter assembly coupling together a first conduit and a second conduit, the shrouded adapter assembly comprising:
a first adapter body comprising a first lumen, a first annular space and a first end, the first end configured to receive an end of the first conduit, the first end comprising first seals;
a second adapter body comprising a second lumen, a second annular space and a second end, the second end configured to receive an end of the second conduit, the second end comprising second seals; and
a clamp operatively engaging the first adapter body and the second adapter body;
whereby the first lumen and the second lumen are in fluid communication with each other, the first seals and the second seals isolate both of the lumens from the first annular space and the second annular space, and the first annular space and the second annular space are in fluid communication with each other.

9. The shrouded adapter assembly of Claim 8, wherein the first adapter body comprises a first inner cylindrical portion nested within a first outer cylindrical portion, with the first annular space between them.

10. The shrouded adapter assembly of Claim 9, wherein the second adapter body comprises a second inner cylindrical portion nested within a second outer cylindrical portion, with the second annular space between them.

11. The shrouded adapter assembly of Claim 10, wherein the first annular space is in fluid communication with the second annular space to form a leak detection space, and the leak detection space is sealed from the first lumen and the second lumen.

12. The shrouded adapter assembly of Claim 11, wherein the first seals further comprise first inner seals proximate an end of the first inner cylindrical portion, and first outer seals proximate an end of the first outer cylindrical portion; and wherein the second seals further comprise second inner seals proximate an end of the second inner cylindrical portion, and second outer seals proximate an end of the second outer cylindrical portion.

13. The shrouded adapter assembly of Claim 12, wherein the clamp further comprises an inner clamp and an outer clamp.

14. The shrouded adapter assembly of Claim 13, further comprising an inner circular ring surrounding the first inner seals and the second inner seals, the inner clamp operatively engaging the inner circular ring; and an outer circular ring surrounding the first outer seals and the second outer seals, the outer clamp operatively engaging the outer circular ring.
